# EUROPEAN PATENT APPLICATION

(11) **EP 2 677 710 A1**
(43) Date of publication of application: **25.12.2013**
(21) Application number: 13156599.6
(22) Date of filing: 25.02.2013
(51) Int. Cl.: H04L 12/717, H04L 12/723

(54) **Relay forward system, path control device, and edge apparatus**

(30) Priority: 18.06.2012 JP 2012136483
(71) Applicant: Hitachi Ltd., Tokyo 100-8280 (JP)
(72) Inventor: Kimura, Masahiro, Tokyo, 100-8220 (JP); Mashimo, Daisuke, Tokyo, 100-8220 (JP)
(74) Representative: MERH-IP Matias Erny Reichl Hoffmann

(57) **Abstract**

In a relay forward system 100, in setting a label switched path between edge nodes 31: information which is dependent on a user network 50 such as routing information in the user network 50, which is also referred to as user network routing information 121, and information which is dependent on a label switching network 30 such as a relay route of a label switched path and a path ID for specifying a label switched path, which is also referred to as internode path information 122 are separated from each other; and are also managed separately in the whole relay forward system 100, to thereby control forwarding of a packet.

## Description

### BACKGROUND OF THE INVENTION

### 1. Field of the Invention

The present invention relates to a technique of relaying and forwarding a packet between a plurality of user networks.

### 2. Description of the Related Art

When telecommunications carriers relay and forward packets between user networks, label switching networks are utilized as relay forward networks which perform relaying and forwarding packets. In such a label switching network, an ingress edge apparatus adds a label indicating an identifier of a relay route from the ingress edge apparatus to an egress edge apparatus, according to a destination address of a packet received from the user network, to thereby create a relay packet. The ingress edge apparatus serves as an entry from a user network to a relay forward network. The egress edge apparatus serves as an exit of the relay forward network connected to the user network and leading to the destination address. Relay nodes constituting the relay forward network then relay and forward the relay packet in accordance with the label until the relay packet reaches the egress edge apparatus. The egress edge apparatus deletes the label from the relay packet so as to turn the relay packet back to the original packet, and transmits the packet to the user network leading to the destination address.

The label switching network is also called a connection type network because, in order to forward a packet, a label switched path (which may also be simply referred to as a path) is set at each relay node along a relay route between an ingress edge apparatus and an egress edge apparatus.

A technique for realizing a label switching network includes IP/MPLS (Internet Protocol/Multi Protocol Label Switching), MPLS-TP (Multi Protocol Label Switching-Transport Profile), PBB (Provider Backbone Bridge), and ATM (Asynchronous Transfer Mode). Of those, IP/MPLS is used in almost all cases.

In a relay forward network using the IP/MPLS technology, an IP router having a label switching function is used as a relay node or an edge apparatus. The IP router exchanges routing information with other IP routers in a relay forward network, using an IP routing control protocol which the IP router itself is equipped with, and determines a relay route in an autonomous and decentralized manner, based on the exchanged routing information. The IP router determines a relay route to reach an egress edge apparatus and sets a label switched path along the relay route.

Another technology of performing routing control has been known, which is completely different from the IP/MPLS technology in which each relay node or each edge apparatus determines a relay route autonomously and decentralizedly. In the another technology of performing routing control, by contrast, a routing control server collects routing information in an integrated manner and distributes the routing information to the relay node or the edge apparatus, to thereby perform routing control (see, for example, Japanese Laid-Open Patent Application, Publication No. 2005-159983).

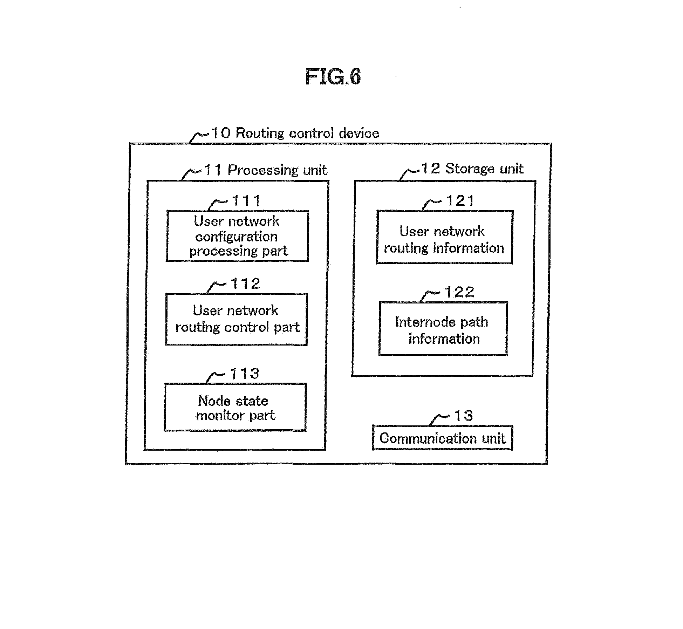

Japanese Laid-Open Patent Application, Publication No. 2005-159983, for example, when a root server (which corresponds to the above-described routing control server) receives a packet between edge apparatuses, the root server identifies an appropriate ingress edge apparatus and an appropriate egress edge apparatus, and notifies the ingress edge apparatus of information on a pair of a destination address of the packet received from the user network and an output link (which corresponds to the above-described label switched path) for forwarding the packet to the egress edge apparatus, to thereby control forwarding of the packet (see paragraph 0038). Hence, the root server holds information on a relay route with a direct association between a destination address (routing information of a user network) and a label switched path (see FIG. 6).

### SUMMARY OF THE INVENTION

As described above, in the method disclosed in Japanese Laid-Open Patent Application, Publication No. 2005-159983, information on a relay route in which a destination address (routing information on a user network) is directly connected to a label switched path.

Thus, if a configuration of a user network is changed or if routing information in a user network is changed due to user' s conditions such as a trouble occurred in the user network, a routing control server needs to reset a path, based on routing information on the newly-changed user network. That is, there is a problem that the routing control server is required to perform mapping of the routing information in the user network and the label switched path all over again in response to the change in the user network. This results in a problem that an amount of setting change information is increased.

Further, if a label switched path is changed in a relay forward network or if an identifier for specifying a label switched path (the identifier is hereinafter referred to as a path ID (PID)) is changed due to a change of circuit lines, there is a problem that the routing control server is required to reassign a path ID for each destination address (routing information in a user network). This results in a problem that an amount of setting change information is increased.

In particular, in a relay forward network having many edge apparatuses, a large amount of setting change information is generated each time a configuration of a user network or a path in a relay forward network is changed. This increases processing load on a routing control server and causes a time lag in completing settings of the plural edge apparatuses. There is also a possibility that this makes routing of a packet instable.

In light of the above problems, the present invention has been made in an attempt to provide a technique of reducing an amount of setting change information in a relay forward network even if a configuration of a user network or a route in a relay forward network is changed.

To solve the above problems, in a relay forward system of the present invention: when a label switched path is set between edge apparatuses, information which is dependent on a user network such as routing information in a user network (which may also be referred to as user network routing information) and information which is dependent on a label switching network such as a relay route of a label switched path (which may also be referred to as internode path information) are separated from each other; and are also managed separately in the whole relay forward system, to thereby control forwarding of a packet.

In the present invention, in a relay forward network, an amount of setting change information in response to a change in a configuration of a user network or in a route in a relay forward network can be reduced.

### BRIEF DESCRIPTION OF THE DRAWINGS

FIG. 1 is a diagram illustrating an example of a configuration of a relay forward system according to an embodiment of the present invention.
FIG. 2A and FIG. 2B are diagrams each illustrating an example of a frame structure of a packet. FIG. 2A is a diagram illustrating a frame structure of a packet used in a user network. FIG. 2B is a diagram illustrating a frame structure of a relay packet used in a path relay network.
FIG. 3 is a diagram illustrating an outline of operations in the relay forward system according to the embodiment.
FIG. 4 is a diagram illustrating an example of user network routing information.
FIG. 5 is a diagram illustrating an example of internode path information.
FIG. 6 is a diagram illustrating an example of functions of a routing control device.
FIG. 7 is a diagram illustrating an example of functions of an edge node.
FIG. 8 is a diagram illustrating an example of user network routing information stored in the edge node.
FIG. 9 is a diagram illustrating an example of individual internode path information stored in the edge node.
FIG. 10 is a diagram illustrating an example of a processing flow in a destination address search part.
FIG. 11 is a diagram illustrating an example of a sequence in the relay forward system when an edge node is newly set.
FIG. 12 is a continuation of FIG. 11 and is a diagram illustrating an example of a sequence in the relay forward system when an edge node is newly set.
FIG. 13 is a diagram illustrating an example of a configuration parameter.
FIG. 14 is a diagram illustrating an example of path setting request information.
FIG. 15 is a diagram illustrating an example of a path ID notification.

### DETAILED DESCRIPTION OF THE EXEMPLARY EMBODIMENT

Next is described in detail an embodiment for carrying out the present invention (to be hereinafter referred to as "this embodiment") with reference to related drawings.

### <Configuration of Relay Forward System>

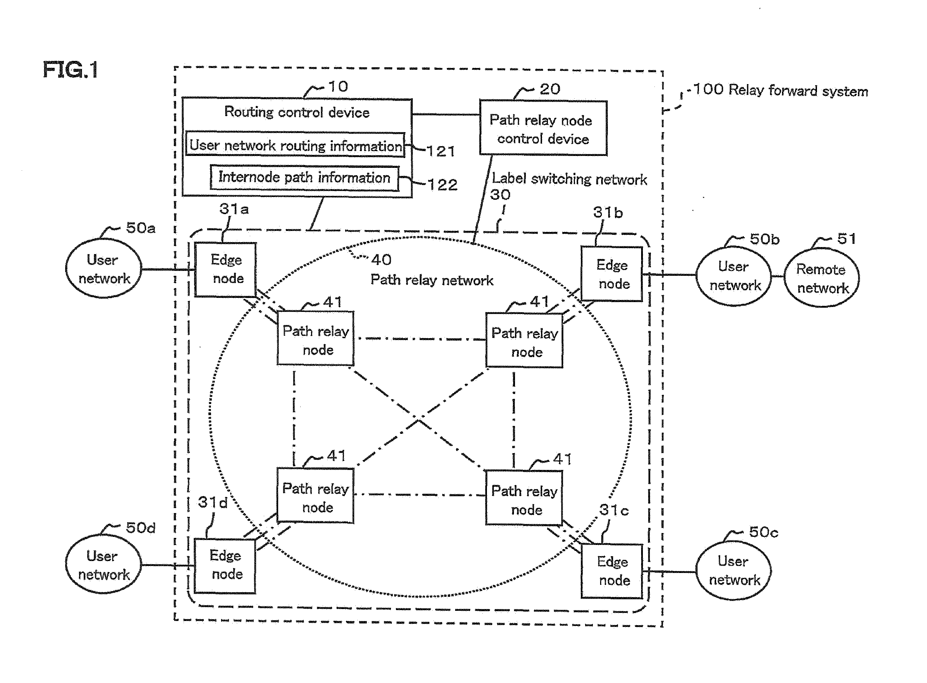

An example of a configuration of a relay forward system according to this embodiment is described with reference to FIG. 1.

As shown in FIG. 1, a relay forward system 100 includes a routing control device 10, a path relay node control device 20, and a label switching network 30. In this embodiment, description is made assuming that the relay forward system 100 and the user network 50 transmit and receive a packet using IP.

In the relay forward system 100 shown in FIG. 1, the routing control device 10 collects routing information in an integrated manner and thereby performs routing control. The relay forward system 100 has a function of connecting a user network 50 (which may also be individually referred to as 50a, 50b, 50c, and 50d) used by a user and relaying and forwarding a packet between the user networks 50. Note that FIG. 1 illustrates four units of the user networks 50a to 50b. However, the number of the units is not limited to four.

The label switching network 30 includes an edge node (which may also be referred to as an edge apparatus) 31 (which may be individually referred to as 31a, 31b, 31c, and 31d) and a path relay network 40 including a path relay node 41. Note that FIG. 1 illustrates four units of the edge nodes 31 and four units of the path relay nodes 41. However, the respective numbers of those units are not limited to four.

The edge node 31 located at an edge of the label switching network 30 is connected to the user network 50. The edge node 31 that receives a packet from the user network 50 (to be hereinafter referred to as an ingress edge apparatus) searches a destination address of the packet and forwards the received packet to another edge node 31 which is connected to the user network 50 leading to the destination address (to be hereinafter referred to as an egress edge apparatus). The egress edge apparatus transmits the packet to the user network 50 leading to the destination address.

More specifically, according to a destination address of a packet received from the user network 50, the ingress edge apparatus (which may also be referred to as a first edge apparatus) adds a label indicating an identifier of a relay route to the egress edge apparatus (which may also be referred to as a second edge apparatus) connected to the user network 50 reaching the destination address, to the received packet, to thereby create a relay packet. The ingress edge apparatus transmits the relay packet to the path relay node 41. The path relay node 41 relays the relay packet to the egress edge apparatus based on the label of the relay packet. The egress edge apparatus then removes the label from the relay packet, to thereby turn the relay packet back to the original packet, and transmits the packet to the user network 50 (that is, another user network) reaching the destination address.

In order to realize a label switched path, techniques for label switching networking such as MPLS, VLAN (Virtual Local Area Network), PBB, and ATM are applicable. In this embodiment, description is made assuming that MPLS is used as an example.

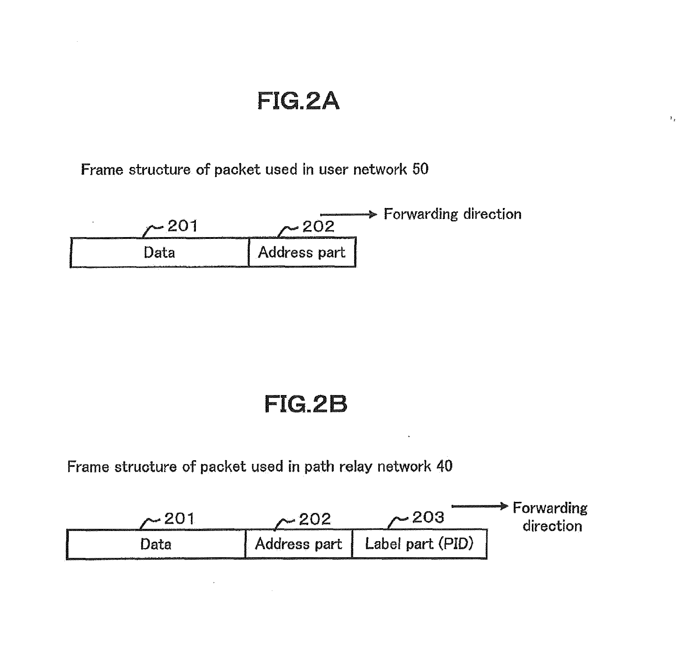

FIG. 2A is a diagram illustrating a frame structure of a packet used in the user network 50. FIG. 2B is a diagram illustrating a frame structure of a relay packet used in a path relay network 40.

The packet shown in FIG. 2A includes: an address part 202 that includes a destination address or the like; and a data 201. The relay packet shown in FIG. 2B further includes a label part (PID) 203 in addition to the packet shown in FIG. 2A so as to be forwarded in the path relay network 40. The label part (PID) 203 shows a label switched path indicating a relay route between an ingress edge apparatus and an egress edge apparatus. Note that the PID indicates an identifier of a relay route from an ingress edge apparatus to an egress edge apparatus. The path relay node 41 relays a relay packet in accordance with the label part (PID) 203.

Returning to FIG. 1, the routing control device 10 has functions of: storing in an integrated manner, user network routing information 121 which includes information on a destination address of a packet received from the user network 50 and on an egress edge apparatus (which may also be referred to as a second edge apparatus), in association with each other, and internode path information 122 which includes information on an ingress edge apparatus (which may also be referred to as a first edge apparatus), on an egress edge apparatus, and on a PID, in association with each other; and updating the above-described information 121, 122 based on a configuration change of the user network 50 or a route change in the path relay network 40. The routing control device 10 also has a function of transmitting and receiving control information to and from the edge node 31 so as to generate the above-described information 121, 122. Note that details of functions of the routing control device 10 will be described later.

The path relay node control device 20 has a function of setting a path in the path relay network 40. In setting a path, because a plurality of routes can be set depending on a topology between the path relay nodes 41, it is assumed that any one of possible plural paths is specified based on an operation policy of an administrator (for example, a telecommunications carrier, an administrator of the user network 50, or the like) of the relay forward system 100. The operation policy used herein means, for example, a policy concerning a method of routing control and how to set an assured communication bandwidth, a quality of a path, or the like. It is assumed herein that an administrator specifies such an operation policy by using an input device not shown and connected to the routing control device 10, and the specified operation policy is notified to the path relay node control device 20.

### <Outline of Operations of Relay Forward System>

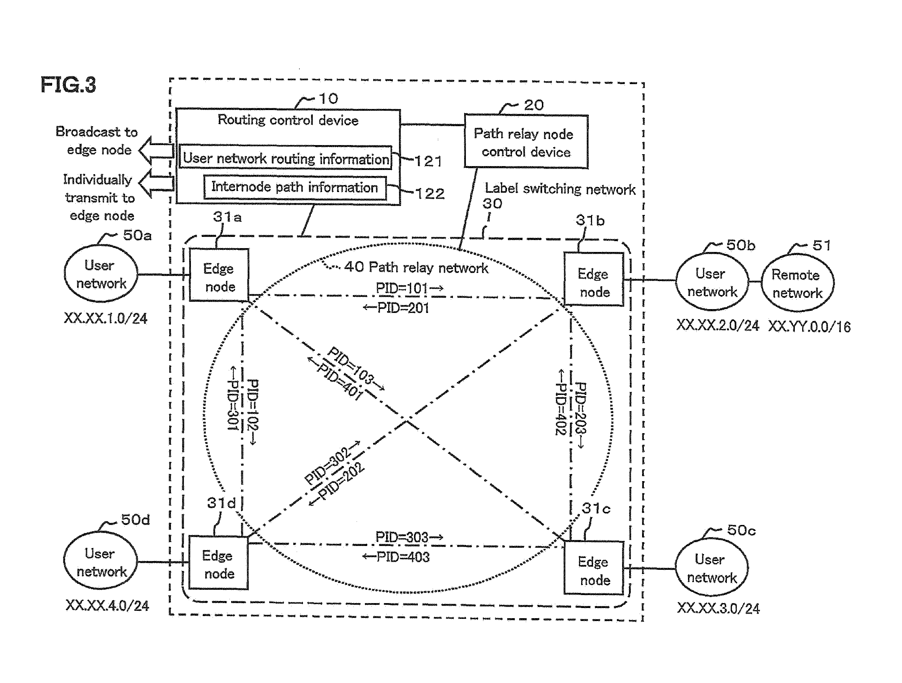

Next is described an outline of operations of the relay forward system 100 with reference to FIG. 3. In FIG. 3, the same reference numerals are given to the components similar to those in FIG. 1, and description thereof is omitted herefrom.

More specifically, FIG. 3 illustrates a case where prefixes of IP addresses of devices present on the user networks 50a, 50b, 50c, 50d, and a remote network 51 are XX.XX.1.0/24, XX.XX.2.0/24, XX.XX.3.0/24, XX.XX.4.0/24, and XX.YY.0.0/16, respectively. In the path relay network 40, a path is shown with a dashed-dotted line. The each path is shown with a PID for identifying the path. A direction in which a relay packet is passed on is shown with an arrow.

The routing control device 10 collects and stores therein the user network routing information 121 and the internode path information 122.

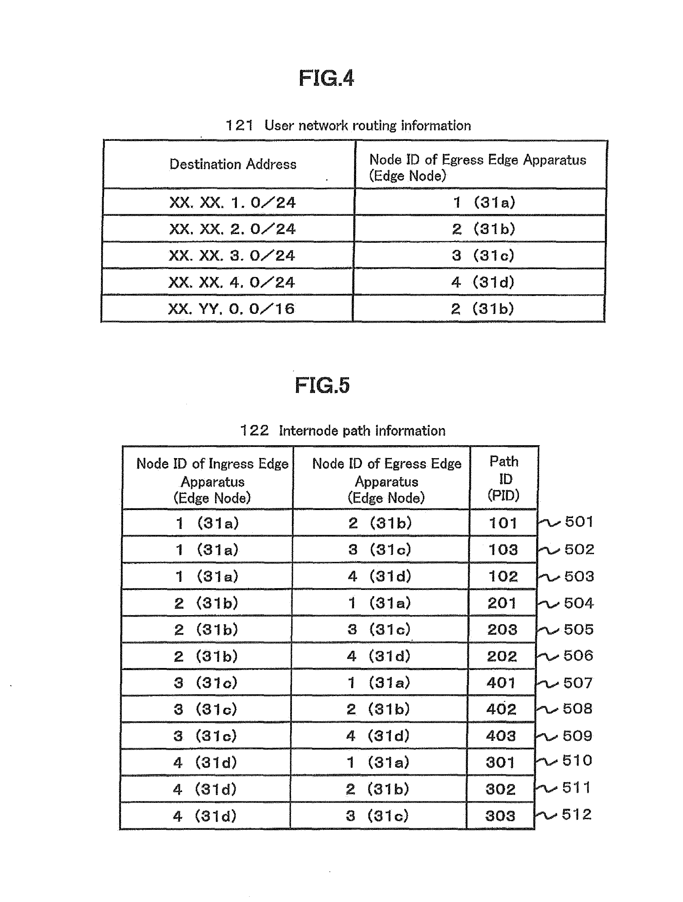

The user network routing information 121 is, as shown in FIG. 4, information in which a destination address of a packet is associated with a node ID (with which a reference numeral of an edge node is shown in parentheses) of an egress edge apparatus. The reference numeral of the edge node shown in parentheses is provided for purpose of explanation.

For example, it is the user network 50a (see FIG. 3) that has a destination address of "XX. XX.1.0/24" of FIG. 4, and the edge node 31a connected to the user network 50a is associated with a node ID of "1". The node ID is set by the administrator of the relay forward system 100 from an input device not shown and connected to the routing control device 10.

Similarly, it is the user network 50b that has the destination address of "XX.XX.2.0/24", and the edge node 31b connected to the user network 50b is associated with the node ID of "2".

It is the user network 50c that has the destination address of "XX.XX.3.0/24", and the edge node 31c connected to the user network 50c is associated with the node ID of "3".

It is the user network 50d that has the destination address of "XX.XX.4.0/24", and the edge node 31d connected to the user network 50d is associated with the node ID of "4".

It is the remote network 51 that has the destination address of "XX.YY.0.0/16" and is associated with the node ID of "2" which corresponds to the node ID for the edge node 31b that is directly connected to the user network 50b leading to the remote network 51.

The internode path information 122 is, as shown in FIG. 5, information in which a node ID of an ingress edge apparatus, a node ID of an egress edge apparatus, and a path ID (PID) are associated with each other. It is assumed herein that the PID is managed by the path relay node control device 20 and is transmitted to the routing control device 10. Note that a reference numeral of an edge node shown in parentheses of FIG. 5 is provided for purpose of explanation.

For example, in a row 501 of FIG. 5, a path ID (PID) between the node ID "1 (31a) " of the ingress edge apparatus and the node ID "2 (31b) " of the egress edge apparatus is "101" as also shown in FIG. 3. In each of the other rows 502 to 512, an appropriate path ID (PID) between a node ID of an ingress edge apparatus and a node ID of an egress edge apparatus is also shown.

Herein, if any change has occurred in the configuration of the user network 50, a relation between a destination address and an egress edge apparatus is also subjected to a change. The user network routing information 121 is changed, too. At this time, however, the internode path information 122 does not need to be changed because the internode path information 122 is not dependent on the configuration change of the user network 50.

Meanwhile, if any change has occurred in the number of units of the edge nodes 31 or in a relay route in the path relay network 40, a path ID is also subjected to a change. The internode path information 122 is changed, too. At this time, however, the user network routing information 121 does not need to be changed because the user network routing information 121 is not dependent on the change of the path ID.

In order to respond to the configuration change of the user network 50, the routing control device 10 broadcasts the user network routing information 121 to all of the edge nodes 31. The broadcast makes it possible to reduce a time until a setting of the edge node 31 is completed.

With regard to the internode path information 122, the routing control device 10 needs not to transmit the entire internode path information 122 but to individually transmit only information in a case where the edge node 31 serves as an ingress edge apparatus, to the appropriate edge node 31. In this case, more specifically, the routing control device 10 individually transmits information in rows 501 to 503, rows 504 to 506, rows 507 to 509, and rows 510 to 512, to the edge nodes 31a, 31b, 31c, and 31d, respectively. This allows a volume of transmitted information to be smaller, to thereby make it possible to reduce a time for completing a setting of the edge node 31. Note that, however, if the number of units of the edge nodes 31 is small, the routing control device 10 may transmit the entire internode path information 122 to the edge node 31.

As described in Japanese Laid-Open Patent Application, Publication No. 2005-159983, if information on a relay route in which a destination address is directly associated with a PID is used, when a change has occurred in the configuration of the user network 50 and/or in a route in the path relay network 40, it is required to individually notify each of the edge nodes 31, of information on all combinations of a PID and user network routing information relevant to the appropriate edge node 31. This increases an amount of the setting change information, which prolongs a time required for changing the entire relay routing information.

On the other hand, in this embodiment, the user network routing information 121 which is dependent on a configuration change in the user network 50 is separated from the path relay internode path information 122 which is dependent on a route change in the path relay network 40. Thus, if the configuration change has occurred in the user network 50, only the user network routing information 121 is changed. If the route change has occurred in the path relay network 40, only the internode path information 122 is changed. The configuration of this embodiment is therefore simpler in change procedure and has a smaller amount of information to be updated by change (which may also be referred to as an amount of setting change information), compared to the technique using the relay routing information in which a destination address is directly associated with a PID. As a result, a time required for setting the information updated by change is reduced.

### <Path Control Device>

An example of functions of the routing control device 10 is described with reference to FIG. 6 (see FIG. 1 where necessary).

The routing control device 10 includes a processing unit 11, a storage unit 12, and a communication unit 13. The processing unit 11 includes a CPU (Central Processing Unit) and a main memory, both not shown. The processing unit 11 loads an application program stored in the storage unit 12 into the main memory, to thereby embody a user network configuration processing part 111, a user network routing control part 112, and a node state monitor part 113.

The user network configuration processing part 111 has a function of acquiring setting information which is information on a change in the number of units of the edge node 31, a change in a relay route, and the like. The setting information is inputted by an administrator of the relay forward system 100 via an input device not shown. Upon acquisition of the setting information, the user network configuration processing part 111 has functions of requesting the path relay node control device 20 to set a label switched path (that is, transmitting path setting request information to the path relay node control device 20) and acquiring a path ID from the path relay node control device 20.

The user network routing control part 112 has functions of transmitting and receiving a protocol signal for exchanging routing information between the user networks 50 via the edge node 31. The user network routing control part 112 also has functions of performing route computation or the like, based on information on route computation in the user network 50 acquired by transmitting and receiving the routing information exchange protocol signal, and identifying an IP address or a prefix (which corresponds to the destination address of FIG. 4) used in the user network 50. The user network routing control part 112 then stores a destination address and an egress edge apparatus in association with each other, in the user network routing information 121. The user network routing control part 112 also acquires information on a path ID from the user network configuration processing part 111 and stores the information in the internode path information 122. The user network routing control part 112 also has a function of transmitting information on the user network routing information 121 and the internode path information 122 to the edge node 31 via the communication unit 13, to thereby control a relay route.

The node state monitor part 113 has functions of acquiring state information which is information on an operation state of the edge node 31, from the same edge node 31 and transmitting the state information to the user network routing control part 112. The state information used herein includes, for example, information on that the edge node 31 has booted up (a boot up notification), information on that the edge node 31 is connected to the user network 50 and is in a communicable state (a connection detection notification), and the like.

The storage unit 12 is a recording device such as a memory, a hard disk, and an SSD (Solid State Drive), or a recording medium such as an IC (Integrated Circuit) card, an SD card, and a DVD (Digital Versatile Disc). The storage unit 12 stores therein an application program to embody respective function of the user network routing information 121, the internode path information 122, and the processing unit 11.

The communication unit 13 is a communication interface and has functions of transmitting and receiving information to and from the edge node 31 in the label switching network 30 or the path relay node control device 20. The communication unit 13 also has a function of broadcasting the user network routing information 121 to all of the edge nodes 31.

### <Edge Node>

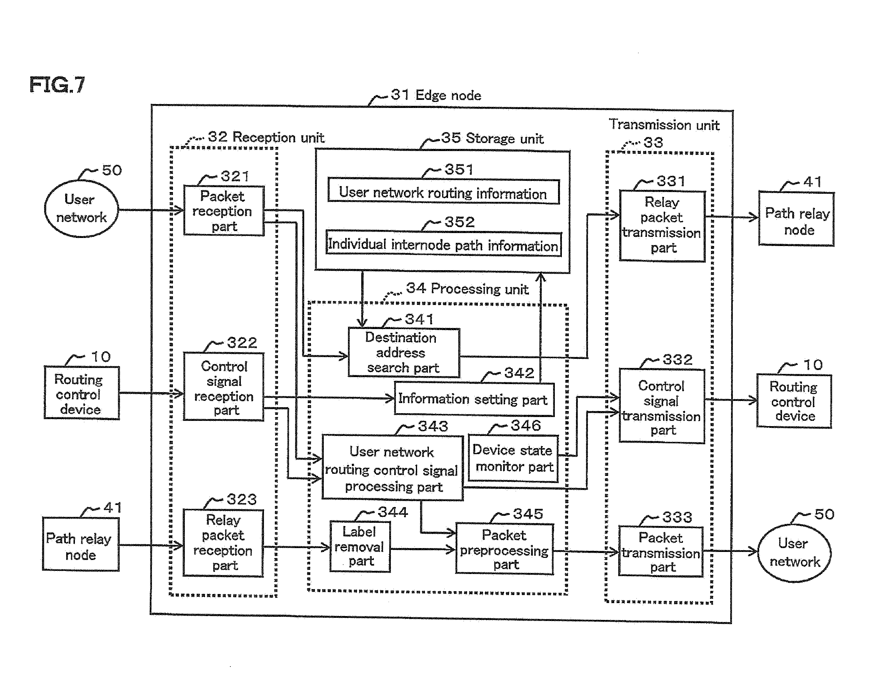

Next is described an example of functions of the edge node 31 with reference to FIG. 7.

The edge node 31 includes a reception unit 32, a transmission unit 33, a processing unit 34, and a storage unit 35.

The reception unit 32 includes: a packet reception part 321 that receives a packet from the user network 50; a control signal reception part 322 that receives a control signal from the routing control device 10; and a relay packet reception part 323 that receives a relay packet from the path relay node 41. The control signal herein includes, for example, information on the user network routing information 121 or the internode path information 122, a routing information exchange protocol signal, and the like.

The transmission unit 33 includes: a relay packet transmission part 331 that transmits a relay packet to the path relay node 41; a control signal transmission part 332 that transmits a control signal to the routing control device 10; and a packet transmission part 333 that transmits a packet to the user network 50. The control signal herein includes, for example, a routing information exchange protocol signal, the state information as described above, and the like.

The processing unit 34 is constituted by a CPU (Central Processing Unit) and a main memory, both not shown. The processing unit 34 loads an application program stored in the storage unit 35 into the main memory, to thereby embody a destination address search part 341, an information setting part 342, a user network routing control signal processing part 343, a label removal part 344, a packet preprocessing part 345, and a device state monitor part 346. The processing unit 34 may be constituted by an integrated circuit which requires no application program.

The destination address search part 341: extracts a destination address from a packet received by the packet reception part 321; searches the user network routing information 351 using the destination address as a key; and extracts a node ID of an egress edge apparatus therefrom. The destination address search part 341 then searches the individual internode path information 352 using the node ID of the egress edge apparatus as a key and finally identifies a path ID (PID). The destination address search part 341: creates a label containing the identified PID; adds the label as the label part 203 (see FIG. 2B) to the packet, to thereby create a relay packet; and transmits the relay packet to the relay packet transmission part 331. An example of a processing flow performed by the destination address search part 341 will be described later.

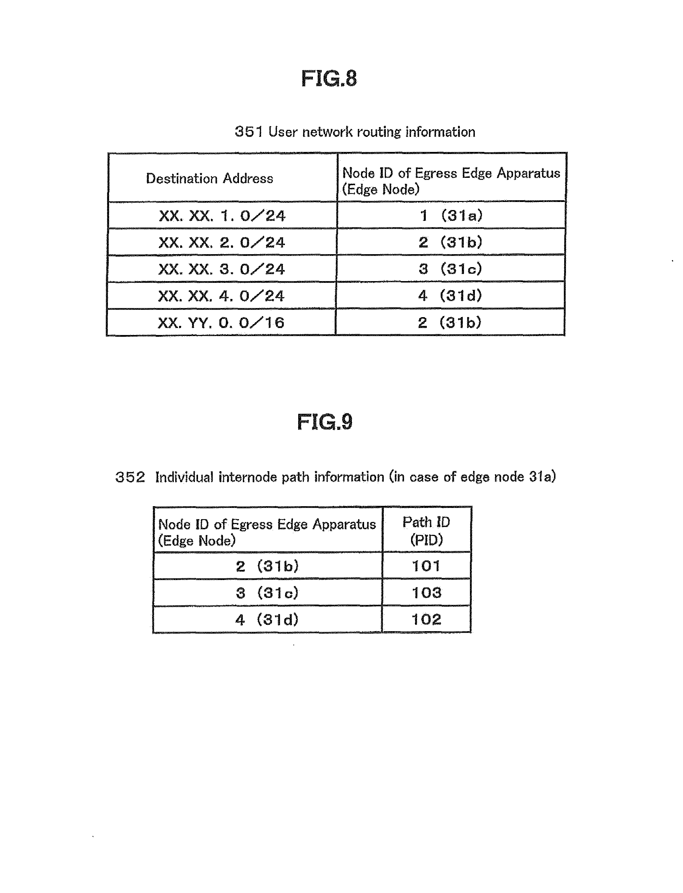

Note that the user network routing information 351 as described above and shown in FIG. 8 is the same as the user network routing information 121 (see FIG. 4) which is broadcast from the routing control device 10 to the edge node 31. The individual internode path information 352 as described above and shown in FIG. 9 corresponds, for example, in a case of the edge node 31a, to respective combinations of a node ID and a path ID of the egress edge apparatus in the rows 501 to 503 of the internode path information 122 (see FIG. 5) and is individually transmitted by the routing control device 10. The individual internode path information 352 may be the same as the information in the rows 501 to 503 of the internode path information 122 (see FIG. 5) as it is.

The information setting part 342 has functions of: extracting information on the user network routing information 121 (see FIG. 4) or the internode path information 122 (see FIG. 5) from the control signal received by the control signal reception part 322; and storing the extracted information in the user network routing information 351 and the individual internode path information 352 of the storage unit 35.

The user network routing control signal processing part 343 has functions of: extracting information for route computation which is necessary for computing routing information in the user network 50, from the routing information exchange protocol signal contained in the packet received by the packet reception part 321; and transmitting the information for route computation to the routing control device 10 via the control signal transmission part 332. The user network routing control signal processing part 343 also has functions of: extracting the routing information exchange protocol signal contained in the control signal received by the control signal reception part 322; and putting the routing information exchange protocol signal into the packet and transmitting the packet to the user network 50 via the packet preprocessing part 345.

The label removal part 344 removes a label from the relay packet received from the relay packet reception part 323, to thereby create a packet. More specifically, the label removal part 344 removes the label part 203 from the frame structure of the relay packet shown in FIG. 2B, to thereby restore the frame structure of the packet shown in FIG. 2A.

The packet preprocessing part 345 has a function of, before transmitting the packet to the user network 50, performing a processing such as adding a header which is required for a communication protocol of a lower layer used in the user network 50, to the packet.

The device state monitor part 346: monitors an operation state of the edge node 31; creates state information if a change in operation state is detected; and transmits the state information to the routing control device 10 via the control signal transmission part 332. The state information used herein includes, for example, information on that the edge node 31 has booted up (a boot up notification), information on that the edge node 31 is connected to the user network 50 and is in a communicable state (a connection detection notification), and the like.

The storage unit 35 is a recording device such as a memory, a hard disk, and an SSD (Solid State Drive), or a recording medium such as an IC (Integrated Circuit) card, an SD card, a DVD (Digital Versatile Disc). The storage unit 35 stores therein an application program to embody respective functions of the user network routing information 351, the internode path information 352, and the processing unit 34.

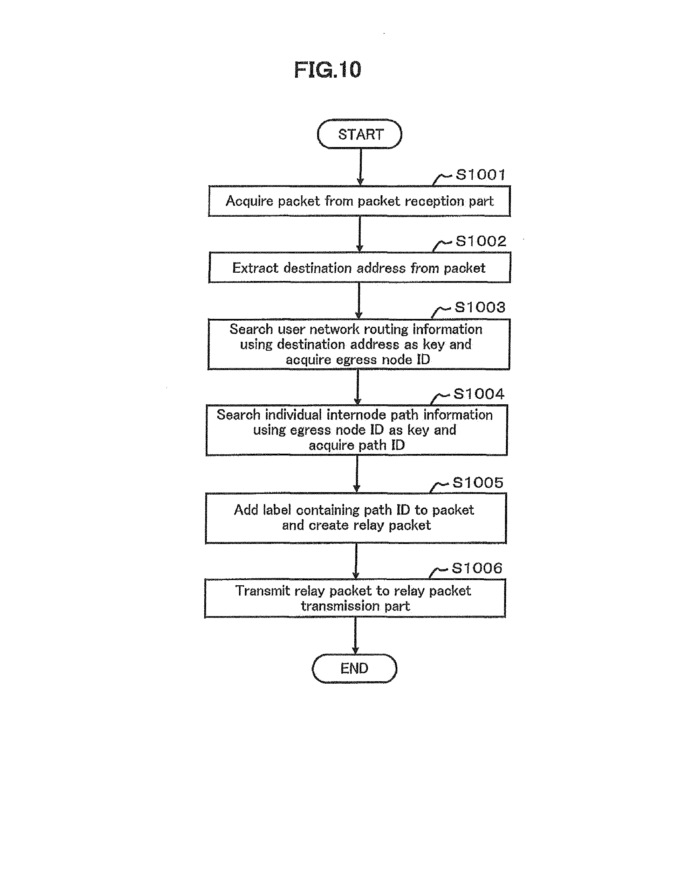

Next is described an example of a processing flow performed by the destination address search part 341 with reference to FIG. 10 (see also FIGS. 7 to 9 where necessary).

In step S1001, the destination address search part 341 acquires a packet from the packet reception part 321.

In step S1002, the destination address search part 341 extracts a destination address from the acquired packet.

In step S1003, the destination address search part 341 searches the user network routing information 351 (see FIG. 8) using the extracted destination address as a key and acquires an egress node ID.

In step S1004, the destination address search part 341 searches the individual internode path information 352 (see FIG. 9) using the acquired egress node ID as a key and thereby acquires a path ID.

In step S1005, the destination address search part 341 adds a label containing the acquired path ID to the packet, to thereby create a relay packet.

In step S1006, the destination address search part 341 transmits the created relay packet to the relay packet transmission part 331.

As described above, the edge node 31 as an ingress edge apparatus references the user network routing information 351 (see FIG. 8) and the individual internode path information 352 (see FIG. 9), acquires a path ID corresponding to a destination address of the received packet, and forwards the packet appropriately. That is, even if information on a relay route is divided into the user network routing information 351 and the individual internode path information 352, a packet can be forwarded appropriately.

### <Example of Sequence of Relay Forward System>

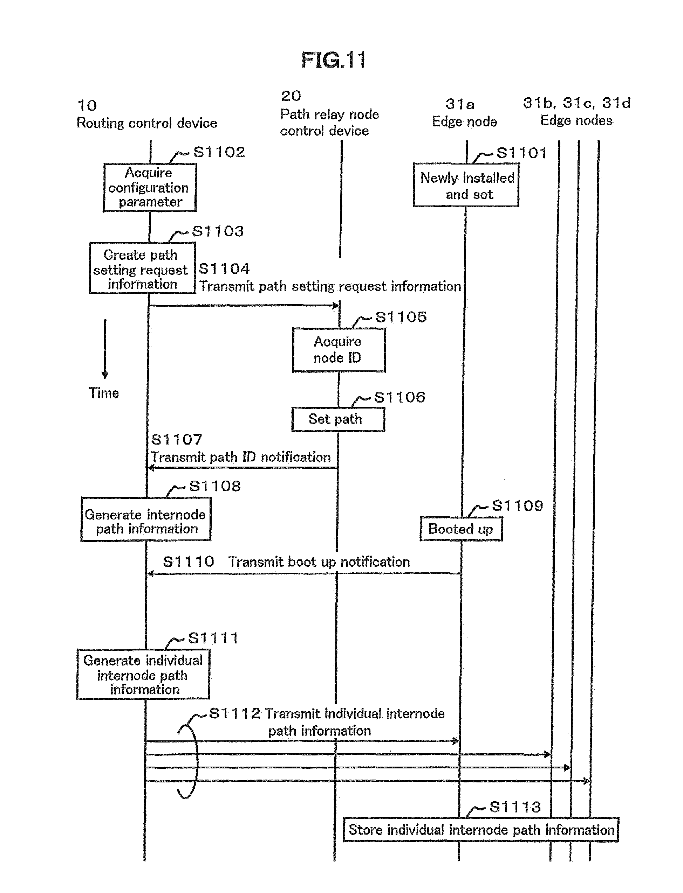

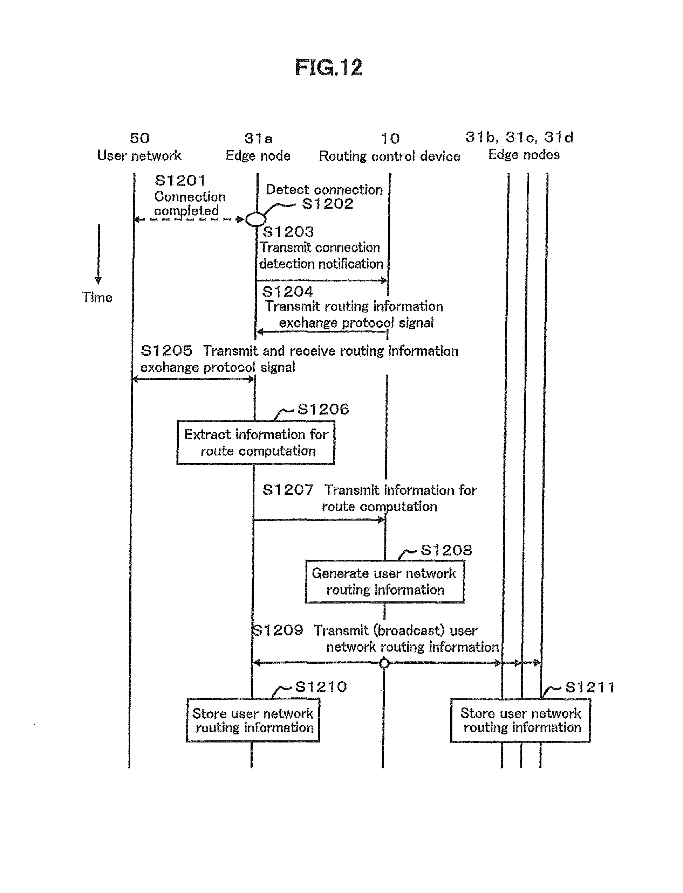

Next is described an example of a sequence which is performed when the edge node 31a is newly set in the relay forward system 100 with reference to FIG. 11 and FIG. 12 (see also FIG. 1 where necessary).

In step S1101, as shown in FIG. 11, the edge node 31a is newly installed and set.

In step S1102, the routing control device 10 acquires a configuration parameter 1300 inputted by an administrator of the relay forward system 100 via an input device not shown.

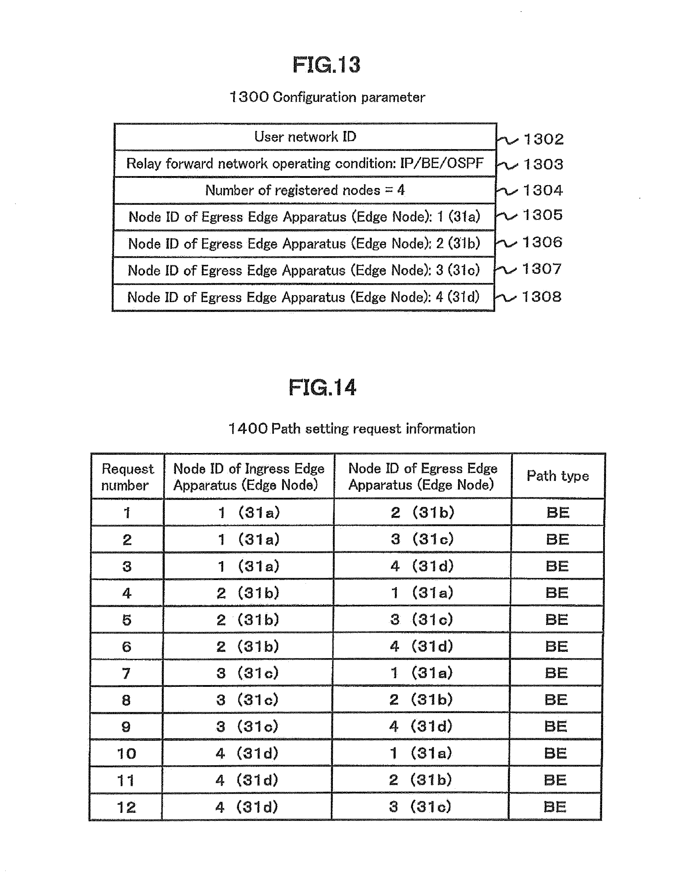

Examples of the configuration parameter 1300 are described with reference to FIG. 13.

In a row 1302, "user network ID" is identification information for identifying the user network 50.

In a row 1303, "relay forward network operating condition" is shown as "IP/BE/OSPF". IP represents a communication protocol. BE represents a communication quality of best effort. OSPF (Open Shortest Path First) represents a type of protocol signal for exchanging the user network routing information.

In a row 1304, "number of registered nodes" represents the number of the edge nodes 31 including the newly installed and set edge node 31 and is "4".

In each of rows 1305 to 1308, a node ID of an egress edge apparatus for identifying the egress edge apparatus is shown.

Returning to FIG. 11, in step S1103, the routing control device 10 creates path setting request information based on the configuration parameter 1300 (see FIG. 13).

Examples of path setting request information 1400 are described with reference to FIG. 14.

As shown in FIG. 14, the path setting request information 1400 includes a request number, a node ID of an ingress edge apparatus, a node ID of an egress edge apparatus, and a path type, in association with each other. In FIG. 14, all possible combinations of a node ID of an ingress edge apparatus and a node ID of an egress edge apparatus are shown. Thus, it can be understood that a full mesh of label switched paths is set between all of the edge nodes 31 (31a, 31b, 31c, 31d). Types if the paths are all "BE".

Returning to FIG. 11, in step S1104, the routing control device 10 transmits the path setting request information 1400 (see FIG. 14) to the path relay node control device 20.

In step S1105, the path relay node control device 20 acquires a node ID for identifying each edge node 31. The path relay node control device 20 also acquires information on to which path relay node 41 a newly installed and set edge node 31a is connected.

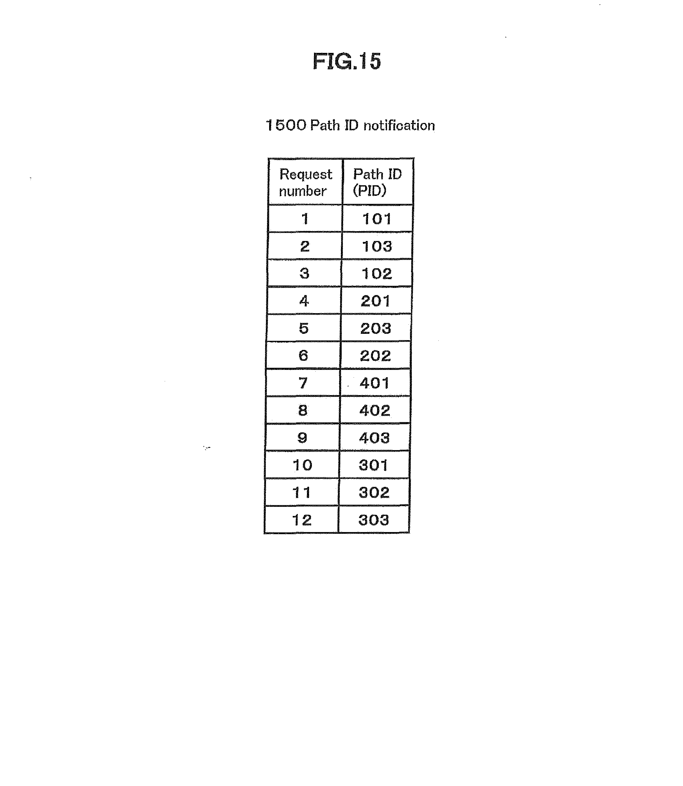

In step S1106, the path relay node control device 20 sets a path based on the received path setting request information 1400 (see FIG. 14). The path relay node control device 20 creates a path ID notification 1500 (see FIG. 15).

The path ID notification 1500 is information in which a request number is associated with a path ID (PID), as shown in FIG. 15.

In step S1107, the path relay node control device 20 transmits the path ID notification 1500 to the routing control device 10.

In step S1108, the control device 10 generates the internode path information 122 (see FIG. 5) using the path setting request information 1400 (see FIG. 14) and the ID notification 1500 (see FIG. 15). The routing control device 10 stores the internode path information 122 in the storage unit 12.

In step S1109, the edge node 31a is booted up.

In step S1110, the device state monitor part 346 of the edge node 31a transmits a boot up notification indicating that the edge node 31a has been booted up, to the routing control device 10.

In step S1111, the routing control device 10 generates the individual internode path information 352 (see FIG. 9) for the each edge node 31.

In step S1112, the routing control device 10 individually transmits the individual internode path information 352 to the each edge node 31.

In step S1113, the each edge node 31 stores the individual internode path information 352 in the storage unit 35 (see FIG. 7).

Note that, in FIG. 11, an example of a sequence is described assuming that the edge node 31a is newly set, that is, a configuration in the label switching network 30 is changed. In the example, the internode path information 122 (see FIG. 5) can be generated regardless of a destination address of the user network 50, and an amount of setting change information is reduced, compared to a case in which a path ID is reset in response to a change in routing information in the user network 50. Further, when the routing control device 10 transmits the internode path information 122, the routing control device 10 translates the internode path information 122 into the individual internode path information 352 for the each edge node 31 with an amount thereof reduced. This can reduce a time until a change in setting is completed.

Moving to FIG. 12, in step S1201, the edge node 31a and the user network 50a are connected to each other and come into a communicable state with the connection completed.

In step S1202, the edge node 31a detects the connection.

In step S1203, the edge node 31a transmits a connection detection notification indicating that the connection has been detected, to the routing control device 10.

In step S1204, the routing control device 10 transmits a routing information exchange protocol signal to the edge node 31a.

In step S1205, the edge node 31a transmits and receives the routing information exchange protocol signal to and from the user network 50a.

In step S1206, the edge node 31a extracts information for route computation from the received routing information exchange protocol signal.

In step S1207, the edge node 31a transmits the extracted information for route computation to the routing control device 10.

In step S1208, the routing control device 10 generates the user network routing information 121 (see FIG. 4).

In step S1209, the routing control device 10 broadcasts the user network routing information 121 to all of the edge nodes 31 (which may also be individually referred to as 31a, 31b, 31c, 31d).

In steps S1210 and S1211, the each edge node 31 (31a, 31b, 31c, 31d) stores therein the user network routing information 121 (see FIG. 3).

In FIG. 12, if the routing information in the user network 50 is changed, only the user network routing information 121 (see FIG. 4) is changed. In this case, an amount of setting change information is reduced, compared to a case in which mapping of the routing information in the user network 50 and a label switched path is required to be conducted again from the beginning. Further, because the routing control device 10 broadcasts the user network routing information 121 (see FIG. 4), a time until a change in setting is completed can be reduced.

As described above, in the relay forward system 100 according to this embodiment, if the routing control device 10 sets a relay route of the edge node 31, the following two settings can be processed as two different and separate sequences. One of the settings is a setting of the internode path information 122 in which along which label switched path a packet is to be passed is specified. The other is a setting of the user network routing information 121 in which to which user network 50 the packet is to be forwarded is specified.

If the routing information in the user network 50 is changed according to needs of a user, it is only necessary for the relay forward system 100 to perform the sequence exemplified in FIG. 12 and set the user network routing information 121. An amount of setting change information can be thus reduced, compared to a case in which a path ID is reset in conjunction with a change in the routing information in the user network 50.

If a setting of a label switched path is changed, it is only necessary for the relay forward system 100 to perform the sequence as exemplified in FIG. 11 and set the internode path information 122. An amount of setting change information can be thus reduced, compared to a case in which mapping of routing information in the user network 50 and a label switched path is required to be conducted again from the beginning.

In the relay forward system 100, the information on a relay route is separated into the user network routing information 121 and the internode path information 122. This can increase a degree of separation between a routing control state of the user network 50 and a path setting state in the label switching network 30.

As described above, in the relay forward system 100 according to this embodiment, when a label switched path is set between the edge nodes 31, forwarding of a packet is controlled as follows. Information which is dependent on the user network 50 such as routing information in the user network 50 (that is, the user network routing information 121) and information which is dependent on the label switching network 30 such as a relay route of a label switched path (that is, the internode path information 122) are separated from each other; and are also managed separately in the whole relay forward system 100.

In this embodiment, description is made assuming that the relay forward system 100 and the user network 50 are each an IP network in which a communication is performed using an IP address as a destination address. Instead of the IP network, the relay forward system 100 and the user network 50 may be, for example, an Ethernet (registered trademark) network in which a MAC (Media Access Control) address of the Ethernet is used as a destination address or a network which operates with other protocol.

In this embodiment, description is made assuming that the same user manages the user network 50 (which may also be individually referred to as 50a, 50b, 50c, and 50d). However, the user network 50 may be constituted by separate and different user networks, may be managed by a plurality of users and may be connected to a single relay forward system 100. In this case, an administrator of the relay forward system 100 can easily change a setting of the label switching network 30 without taking into account dependency on routing information in the user network 50, because information on a relay route is separated into the user network routing information 121 and the internode path information 122. That is, a degree of freedom in operating the label switching network 30 is improved.

The present invention is not limited to the above-described embodiment and includes a variety of modifications. For example, the above-described embodiment is provided so as to explain in detail the present invention in an easily understandable manner. The present invention is not necessarily limited to a configuration in which all of the above described in the embodiment are included. Part of a configuration of one embodiment can be replaced by that of another embodiment. Also, part of a configuration of one embodiment can be added to, deleted from, and replaced by that of other configuration.

Part or all of the above-described configurations, functions, processing parts, and the like may be implemented by hardware by, for example, designing part or all of those using an integrated circuit. The above configurations, functions, and the like may be implemented by software in such a manner that a processor interprets a program for realizing respective functions and executes the program. Information in a program, a table, a file, or the like for realizing the respective functions can be stored in a recording device such as a memory, a hard disk, an SSD (Solid State Drive), or a recording medium such as an IC (Integrated Circuit) card, an SD card, and a DVD (Digital Versatile Disc).

In this embodiment, control lines or information lines which are deemed to be necessary for explanation are shown. Not all of the control lines or the information lines of a finished product or the like are shown. In reality, almost all components of such a finished product may be connected to each other.

## Claims

1. A relay forward system, comprising:
a routing control device that: stores, in a storage unit thereof, internode path information which includes information on a first edge apparatus connected to a first user network, on a second edge apparatus connected to a second user network, and on a relay route from the first edge apparatus to the second edge apparatus, in association with each other, and user network routing information which includes information on a destination address of a packet received from the first user network and on the second edge apparatus, in association with each other; and transmits the internode path information and the user network routing information to the first edge apparatus;
the first edge apparatus that, when the packet is received from the first user network, references the internode path information and the user network routing information, identifies the second edge apparatus to which the packet is to be forwarded, and forwards the packet to the identified second edge apparatus; and
the second edge apparatus that transmits the packet forwarded from the first edge apparatus, to the second user network.

2. The relay forward system according to claim 1,
wherein, when the packet is received from the first user network, the first edge apparatus extracts the destination address of the packet; extracts the second edge apparatus by searching the user network routing information using the destination address as a key; identifies the relay route by searching the internode path information using the second edge apparatus as a key; and transmits the packet to the second edge apparatus via the relay route.

3. The relay forward system according to claim 1,
wherein the routing control device transmits the user network routing information to the first and second edge apparatuses.

4. The relay forward system according to claim 1,
wherein the routing control device broadcasts the user network routing information to the first and second edge apparatuses.

5. The relay forward system according to claim 1,
wherein the routing control device: generates individual internode path information by extracting information on a pair made of the second edge apparatus with which the first edge apparatus is associated, and the relay route, from the internode path information; and transmits the individual internode path information to the first edge apparatus.

6. The relay forward system according to claim 1,
wherein the routing control device changes the user network routing information in response to a change in configuration of the first or second user network.

7. The relay forward system according to claim 1,
wherein the routing control device changes the internode path information in response to a change in the relay route.

8. A routing control device, comprising:
a storage unit that stores therein internode path information which includes information on a first edge apparatus connected to a first user network, on a second edge apparatus connected to a second user network, and on a relay route from the first edge apparatus to the second edge apparatus, in association with each other, and user network routing information which includes information on a destination address of a packet received from the first user network and on the second edge apparatus, in association with each other; and
a processing unit that transmits the internode path information and the user network routing information to the first edge apparatus and controls the relay route of the packet which is received from the user network and is forwarded by the first edge apparatus.

9. A first edge apparatus, comprising:
a reception unit that receives a packet from a first user network;
a storage unit that stores therein individual internode path information which includes information on a second edge apparatus connected to a second user network and on a relay route from the first edge apparatus itself to the second edge apparatus in association with each other, and user network routing information which includes information on a destination address of the packet received from the first user network and on the second edge apparatus, in association with each other; and
a processing unit that, when the packet is received from the first user network, references the individual user network routing information and the internode path information, identifies the second edge apparatus to which the packet is to be forwarded, and forwards the received packet to the identified second edge apparatus.
